# EUROPÄISCHE PATENTANMELDUNG

(11) **EP 2 226 694 A1**
(43) Veröffentlichungstag der Anmeldung: **08.09.2010**
(21) Anmeldenummer: 09003230.1
(22) Anmeldetag: 05.03.2009
(51) Int. Cl.: G05B 19/042, G05B 19/418, H04L 12/24

(54) **Programmiergerät und Verfahren zur Parametrisierung einer Kommunikationsverbindung zwischen Automatisierungskomponenten in einer industriellen Automatisierungsanordnung**

(71) Anmelder: SIEMENS AKTIENGESELLSCHAFT, 80333 München (DE)
(72) Erfinder: Mütze, Claudia Lisette, 92353 Postbauer-Heng (DE)

(57) **Zusammenfassung**

Die Erfindung betrifft ein Programmiergerät und Verfahren zur Parametrisierung einer Kommunikationsverbindung zwischen Automatisierungskomponenten in einer industriellen Automatisierungsanordnung, wobei den Automatisierungskomponenten (AK1, AK2) jeweils ein Datensatz für die Speicherung von Verbindungsparametern der Kommunikationsverbindung (KV) zugeordnet ist. Dabei ist das Programmiergerät zur automatischen Bereitstellung von Verbindungsparametern für den Datensatz zumindest der ersten Automatisierungskomponente (AK1) eingerichtet ist, wobei das Programmiergerät zum Abruf und zur Auswertung von Projektierungsdaten zumindest der ersten Automatisierungskomponente (AK1) aus Projektierungsdaten der Automatisierungsanordnung ausgebildet ist, wobei das Programmiergerät zum Einfügen von durch die Auswertung gewonnenen Verbindungsparameter zumindest in den Datensatz der ersten Automatisierungskomponente (AK1) eingerichtet ist.

## Beschreibung

Die Erfindung betrifft ein Programmiergerät zur Parametrisierung einer Kommunikationsverbindung zwischen Automatisierungskomponenten gemäß dem Oberbegriff des Patentanspruchs 1 und ein Verfahren zur Parametrisierung einer Kommunikationsverbindung gemäß dem Oberbegriff des Patentanspruchs 8.

Automatisierungskomponenten in industriellen Automatisierungsanordnungen sind regelmäßig über Datenleitungen oder mittels Datennetzen miteinander verbunden. Über die Datenleitungen oder Datennetze tauschen die Automatisierungskomponenten, also Sensoren, Aktoren, Rechner, Controller, Datenbanken, Steuerungssysteme etc. Daten miteinander aus. Diese Daten können beispielsweise Messwerte, Befehle, Abfragemeldungen oder sonstige Nachrichten sein.

Die Anordnung der Automatisierungskomponenten innerhalb der Automatisierungsanordnung und die Interaktion zwischen den Automatisierungskomponenten werden zumeist an Bildschirmarbeitsplätzen manuell oder teilautomatisch vorgenommen; dieser Vorgang wird als ein erster Schritt einer "Projektierung" oder eines "Engineerings" bezeichnet. Die bei der Projektierung behandelten Automatisierungskomponenten werden meist als Funktionsblöcke in einer Geräte-Netzwerk-Übersicht dargestellt, wobei jeder Funktionsblock in der Regel eine logische Einheit darstellt. Ein solcher Funktionsblock kann genau einem realen Hardware-Baustein entsprechen, es kann aber auch in vielen Fällen ein realer Hardware-Baustein gemäß seiner technischen Funktionalität durch eine Vielzahl von Funktionsblöcken repräsentiert werden, oder umgekehrt.

Bei der Projektierung werden die Funktionsblöcke zunächst gemäß der gewünschten Funktionalität der Automatisierungsanordnung miteinander verschaltet (verbunden). Anschließend wird mittels eines Programmiergerätes, dem sog. ProgrammierEditor, die Software für die programmierbaren Controller ("CPU") der Automatisierungsanordnung erstellt, wobei zu jedem an einer Kommunikationsverbindung beteiligten Funktionsblock sowohl ein Programmbaustein (der sog. "Kommunikationsbaustein") als auch ein zugeordneter Datenblock (Datensatz) mit Verbindungsparametern vorgesehen wird, wobei die Verbindungsparameter beim Betrieb der Automatisierungsanordnung bzw. der Automatisierungskomponenten den Kommunikationsbausteinen zur Verfügung stehen und die Arbeitsweise dieser festlegen.

Für den Nachrichten- oder Datenaustausch zwischen den Automatisierungskomponenten müssen diese zum Einen, wie bereits erwähnt, die notwendigen physikalischen Voraussetzungen mitbringen, d. h. insbesondere, dass diese an einer gemeinsamen Datenleitung oder einem Datennetz angeschlossen sind. Insbesondere im Beispiel der Datennetze muss jede an einer Kommunikationsverbindung beteiligte Komponente zusätzlich noch mit Software (den erwähnten Kommunikationsbausteinen) und Verbindungsparametern ausgestattet werden, wobei die Verbindungsparameter derart gewählt sein müssen, dass die zumindest zwei an einer Kommunikationsverbindung beteiligten Automatisierungskomponenten auch tatsächlich eine funktionsfähige Verbindung miteinander aufbauen können. So arbeitet beispielsweise das "Internet-Protokoll" mit IP-Adressen, wobei sich die IP-Adressen der beteiligten Kommunikationspartner zwar voneinander unterscheiden müssen, aber demselben Subnetz angehören müssen. Neben den IP-Adressen muss auch eine Vielzahl weiterer Verbindungsparameter derart gewählt werden, dass eine funktionsfähige Kommunikationsverbindung aufgebaut werden kann. Wie am Beispiel der IP-Adressen beschrieben, müssen die Datensätze mit den Verbindungsparametern der einzelnen Kommunikationspartner jeweils an die Verbindungsparameter des jeweils anderen Kommunikationspartners angepasst sein. Es ergibt sich daraus im Stand der Technik die Herausforderung, dass bei der Projektierung bzw. der damit verbundenen Programmierung einer Kommunikationsverbindung zwischen Automatisierungskomponenten jeweils zwei Datensätze mit Verbindungsparametern befüllt werden müssen, wobei auf eine jeweils "kompatible", d.h. zueinander passende, Wahl der Parameter geachtet werden muss. Es ergibt sich daraus der Nachteil, dass die Projektierung von Kommunikationsverbindungen zwischen Automatisierungskomponenten einen hohen, meist manuellen Aufwand erfordert und zudem fehleranfällig ist, weil an zwei Stellen der Programmierung zueinander passende Parameter gewählt werden müssen.

Es ist also eine Aufgabe der vorliegenden Erfindung, die Programmierung von Kommunikationsverbindungen zwischen Automatisierungskomponenten zu vereinfachen und Fehler bei der Wahl der Verbindungsparameter möglicht zu verhindern.

Die Aufgabe wird durch ein Programmiergerät gemäß dem Patentanspruch 1 und durch ein Verfahren gemäß dem Patentanspruch 8 gelöst.

Die Erfindung macht sich zu Nutze, dass in den Projektierungsdaten einer industriellen Automatisierungsanordnung zumeist über die an der Kommunikationsverbindung zu beteiligenden Automatisierungskomponenten Informationen vorliegen, die für die Auswahl von Verbindungsparametern wichtig sind. Darüber hinaus sind in den Projektierungsdaten meist auch Informationen über das verwendete Datennetzwerk enthalten, wodurch sich ebenfalls bereits festlegen lässt, welche Kommunikationsprotokolle verwendet werden können, und welche nicht. Es ist ein zentraler Gedanke der Erfindung, diese bereits vorliegenden Informationen automatisch auszuwerten und damit die Verbindungsparameter-Sätze der betroffenen Automatisierungskomponenten weitgehend oder vollständig und möglichst vollautomatisch zu Parametrisieren.

Zur Lösung der Aufgabe wird insbesondere ein Programmiergerät zur Parametrisierung einer Kommunikationsverbindung (Kommunikationsbeziehung) zwischen Automatisierungskomponenten in einer industriellen Automatisierungsanordnung vorgeschlagen,
wobei einer ersten und einer zweiten der Automatisierungskomponenten jeweils einen Datensatz für die Speicherung von Verbindungsparametern der Kommunikationsbeziehung zugeordnet ist. Dabei ist das Programmiergerät zur automatischen Bereitstellung von Verbindungsparametern für den Datensatz zumindest der ersten Automatisierungskomponente eingerichtet, wobei das Programmiergerät zum Abruf und zur Auswertung von Projektierungsdaten zumindest der ersten Automatisierungskomponente aus Projektierungsdaten der Automatisierungsanordnung ausgebildet ist. Dabei ist das Programmiergerät weiter zum Einfügen der durch die Auswertung gewonnenen Verbindungsparameter zumindest in den Datensatz der ersten Automatisierungskomponente eingerichtet. Weiter ist das Programmiergerät zur Anzeige eines Eingabe-Dialogs für die in den Datensätzen der ersten und der zweiten Automatisierungskomponente vorgesehenen Verbindungsparameter eingerichtet, wobei einem Benutzer mittels des Eingabe-Dialogs die Eingabe von nicht den Projektierungsdaten entnehmbaren Verbindungsparametern und/oder die Änderung der aus den Projektierungsdaten gewonnenen Verbindungsparametern angeboten wird. Durch ein solches Programmiergerät wird vermieden, dass ein Benutzer in zwei unterschiedlichen Schritten die zumindest zwei an der Kommunikationsbeziehung beteiligten Automatisierungskomponenten getrennt parametrisiert, so dass Doppeleingaben und Fehleingaben vermieden werden.

Für denselben Zweck sieht die Erfindung außerdem ein Verfahren für ein Programmiergerät zur Konfigurierung einer Kommunikationsverbindung (Kommunikationsbeziehung) zwischen Automatisierungskomponenten in einer industriellen Automatisierungsanordnung vor, wobei das Programmiergerät in einem ersten Schritt aus den Projektierungsdaten der Automatisierungsanordnung die Projektierungsdaten einer ersten Automatisierungskomponente ausliest, in einem zweiten Schritt aus den ersten Projektierungsdaten die für die erste Automatisierungskomponente möglichen Verbindungsparameter für Kommunikationsbeziehungen ermittelt, in einem dritten Schritt aus den Projektierungsdaten der Automatisierungsanordnung die Projektierungsdaten einer zweiten Automatisierungskomponente ausliest, in einem vierten Schritt aus diesen Projektierungsdaten der zweiten Automatisierungskomponente die für die zweite Automatisierungskomponente möglichen zweiten Verbindungsparameter ermittelt, in einem fünften Schritt aus den jeweils möglichen Verbindungsparametern der ersten und der zweiten Automatisierungskomponente jeweils die Verbindungsparameter für einen ersten und einen zweiten Datensatz für die erste und die zweite Automatisierungskomponente auswählt, wobei die ausgewählten Verbindungsparameter der ersten Automatisierungskomponente und die der zweiten Automatisierungskomponente zum Zwecke einer funktionsfähigen Kommunikationsverbindung aufeinander abgestimmt sind, und in einem sechsten Schritt die ausgewählten Verbindungsparameter in einem Eingabe-Dialog angezeigt und den Automatisierungskomponenten in den Projektierungsdaten zugewiesen werden. Dadurch werden die erforderlichen Parameter weitgehend automatisiert und fehlersicher ermittelt und zugewiesen.

Vorteilhafte Ausgestaltungen des erfindungsgemäßen Programmiergerätes sind in den abhängigen Patentansprüchen angegeben. Die dabei angegebenen Merkmale und Vorteile gelten sinngemäß auch für das erfindungsgemäße Verfahren.

Eine höhere Ersparnis an manueller Arbeit und eine bessere Fehlersicherheit ergeben sich, wenn auch die Verbindungsparameter für die zweite Automatisierungskomponente automatisch erzeugt werden. Dazu ist das Programmiergerät vorteilhaft zur automatischen Generierung von weiteren Verbindungsparametern für den Datensatz der zweiten Automatisierungskomponente aus den Projektierungsdaten der Automatisierungsanordnung eingerichtet und zum Einfügen dieser Verbindungsparameter in den Datensatz der zweiten Automatisierungskomponente ausgestaltet.

Eine gute Kontrolle der ermittelten Verbindungsparameter ergibt sich, wenn das Programmiergerät zur Funktionsanalyse der in den Datensätzen gespeicherten Verbindungsparameter eingerichtet ist, und überdies zur Anzeige eines Diagnosefensters über den Zustand der projektierten Kommunikationsbeziehung ausgebildet ist. Dieses Diagnosefenster ist vorteilhaft im laufenden Betrieb der Automatisierungsanordnung darstellbar und zeigt dabei fortlaufend den Zustand der Verbindung an.

In vielen Fällen können noch weitere, dritte Automatisierungskomponenten Einfluss auf die Kommunikationsbeziehung haben. So können beispielsweise Switche oder Router oder Komponenten mit einer Firewall-Funktionalität im logischen Verbindungsweg der im Rahmen der Kommunikationsbeziehung geplanten Kommunikationsverbindung angeordnet sein. In solchen und anderen Fällen müssen logische Adressen (beispielsweise IP-Adressen) von anderen Komponenten desselben Netzsegmentes berücksichtigt werden. In den Fällen, in denen also für den Betrieb einer Kommunikationsverbindung gemäß der projektierten Kommunikationsbeziehung der Einsatz einer dritten Automatisierungskomponente vorgesehen ist, ist das Programmiergerät vorteilhaft zur Generierung von dritten Verbindungsparametern und zur Speicherung dieser in einem Datensatz für die Verbindungsparameter der dritten Automatisierungskomponente eingerichtet, wobei das Programmiergerät zur Generierung dieser dritten Verbindungsparameter aus den Projektierungsdaten der Automatisierungsanordnung und damit unter Berücksichtigung der technischen und der Verbindungsparameter der ersten und der zweiten Automatisierungskomponente eingerichtet.

Vorteilhaft ist das Programmiergerät als eine Komponente, beispielsweise als Software-Plug-In, in einem Engineeringtool für die Automatisierungsanordnung realisiert. Damit hat das Programmiergerät automatisch Zugriff auf die Projektierungsdaten der betrachteten Automatisierungskomponenten.

Ein Ausführungsbeispiel des erfindungsgemäßen Programmiergerätes wird nachfolgend anhand der Zeichnungen erläutert.

### Dabei zeigen:

- Figur 1: eine schematisch dargestellte Kommunikationsanordnung auf der Benutzeroberfläche eines Programmiergerätes, und
- Figur 2: einen Eingabe-Dialog mit vorgegebenen Verbindungsparametern der beiden Automatisierungskomponenten.

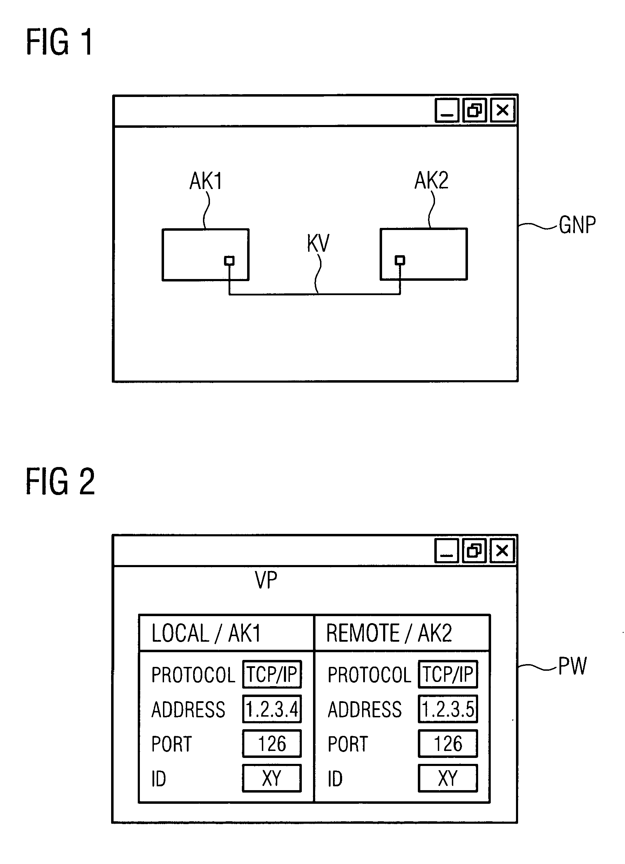

In der Figur 1 ist schematisch die Benutzeroberfläche GNP (Geräte-Netzwerk-Projektierung) eines Engineering-Tools einer industriellen Automatisierungsanordnung dargestellt. Dabei sollen zwei industrielle Automatisierungskomponenten AK1, AK2 mittels einer Kommunikationsverbindung KV miteinander verbunden werden. Bei den Automatisierungskomponenten AK1, AK2 handelt es sich um mikroprozessorgesteuerte Einheiten, welche über ein Datennetz (hier: Industrial Ethernet) miteinander verbunden sind; alternativ könnte beispielsweise auch ein MPI- oder ein Profibus-Netzwerk verwendet werden. Um eine Kommunikationsverbindung KV zwischen den beiden Automatisierungskomponenten AK1, AK2 aufbauen zu können, muss die auf die Automatisierungskomponenten AK1, AK2 jeweils zu ladende Betriebssoftware mit entsprechenden Programmroutinen versehen werden, welche die entsprechende Funktionalität für ein protokollkonforme Kommunikation zur Verfügung stellen. Die erforderliche Software wird dabei der jeweiligen Automatisierungskomponente AK1, AK2 auf einer (nicht dargestellten) Benutzeroberfläche, dem sog. "Programmiereditor", eines Programmiergerätes zugeordnet, indem ein sog. "Kommunikationsbaustein" der entsprechenden Automatisierungskomponente AK1, AK2 jeweils zugeordnet wird. Damit ist sichergestellt, dass bei der Inbetriebnahme der Automatisierungsanordnung die entsprechenden Programmroutinen (Source-Code) zusammen mit den anderen erforderlichen Software-Routinen kompiliert, gebunden und in den Programmspeicher der jeweiligen Automatisierungskomponente AK1, AK2 geladen werden.

Neben der für den Betrieb einer Kommunikationsverbindung KV erforderlichen Software, den beschriebenen Programmbausteinen (auch "Kommunikationsbausteine" genannt), müssen die Automatisierungskomponenten AK1, AK2 jeweils mit einem Datensatz ("Datenbaustein") versehen werden, der die für eine Kommunikationsverbindung KV erforderlichen Verbindungsparameter umfassen. In dem jeweiligen Datensatz ist auch festgelegt, welche Art von Kommunikationsverbindung KV aufgebaut werden soll er gibt also beispielsweise das Kommunikationsprotokoll und eine Verbindungsart an. Während der Programmierung, d.h. während der Erstellung der Software für die Automatisierungsanordnung, wird für die Automatisierungskomponenten AK1, AK2 jeweils eine solcher Datensatz angelegt und gespeichert. Sowohl für das Anfügen eines Programmbausteins (Kommunikationsbausteins) als auch für das Anlegen und Befüllen eines Datenbausteins kann die Benutzeroberfläche des verwendeten Programmiergerätes (in den Figuren nicht dargestellt) unterschiedliche Bedienkonzepte unterstützen, wobei im Folgenden ein schrittweises Bedienkonzept vorgestellt werden soll; alternativ kann auch ein sog. "Wizard" oder ein anderes Bedienkonzept verwendet werden. Dabei werden die Verbindungsparameter für die Datensätze mit den Verbindungsparametern weitgehend automatisch aus den Projektierungsdaten gewonnen und dem Benutzer automatisch bereitgestellt.

Ein Anwender fügt zunächst einen Kommunikationsbaustein (z.B. einen sog. "TCON"-Baustein) auf der grafischen Programmieroberfläche des Programmiergerätes an das Software-Netzwerk eines Programmbausteins der Automatisierungskomponente AK1 an; dasselbe geschieht mit einem Kommunikationsbaustein an dem Software-Netzwerk des Programmbausteins der Automatisierungskomponente AK2, wobei der letztgenannte Schritt auch automatisch von dem Programmiergerät vorgenommen werden kann, weil mit der grafischen Projektierung der Kommunikationsverbindung KV in der Sicht der Geräte-Netzwerk-Projektierung GNP bereits beide Kommunikationspartner feststehen.

Nun wird automatisch in dem Programmier-Fenster PW, welches in der Figur 2 dargestellt ist, ein Eingabedialog für die Verbindungsparameter VP dargestellt; dabei sind die Verbindungsparameter der ersten Automatisierungskomponente AK1 unter den Begriff "LOCAL" zusammengefasst, während die Verbindungsparameter der Automatisierungskomponente AK2 in einem Feld "REMOTE" dargestellt sind. Im vorliegenden Beispiel ist es eine Konvention, dass die derzeit zu programmierende Komponente (hier: Automatisierungskomponente AK1) als "local" bezeichnet wird, und die damit im Zusammenhang stehende "entfernte" Komponente (hier: Automatisierungskomponente AK2) als "remote". In der Praxis bietet sich an, durchgängig im Projekt eindeutige Bezeichnungen zu verwenden.

In der Eingabemaske VP werden vom Anwender auszufüllende Parameter deutlich hervorgehoben, beispielsweise durch eine rote Hinterlegung des Eingabefeldes. Entsprechend sind solche Parameter, die unvollständig ausgefüllt sind oder zu einer nicht-funktionierenden Kommunikationsverbindung KV führen würden, ebenfalls in einem solchen Eingabedialog VP automatisch markiert.

Im vorliegenden Ausführungsbeispiel greift das Programmiergerät auf die Projektierungsdaten der Automatisierungskomponenten AK1, AK2 zu und stellt fest, dass beide aufgrund ihrer technischen Ausstattung und aufgrund der Spezifikation des zur Verfügung stehenden Datennetzwerkes verschiedene Kommunikationsprotokolle unterstützen, hier beispielsweise TCP/IP, ISO on TCP, UDP, MPI oder PROFIBUS. Somit wird für den Anwender ein Auswahldialog dargestellt, bei dem er für die Automatisierungskomponente AK1 zwischen diesen Kommunikationsprotokollen auswählen kann; hier sei angenommen, dass der Benutzer sich für das TCP/IP-Protokoll entscheidet. Diese Auswahl übernimmt der Eingabedialog sowohl für die Automatisierungskomponente AK1, als auch für die Automatisierungskomponente AK2. Entsprechend werden als weitere Felder des Eingabedialogs VP die für das ausgewählte TCP/IP-Protokoll notwendigen Parameter, nämlich IP-Adresse, IP-Portnummer und eine interne Identifikationsnummer ("ID") dargestellt.

Das Programmiergerät entnimmt nun den Projektierungsdaten die Information, dass für das verwendete Netzsegment des hier verwendeten Industrial-Ethernet-Netzwerks das Netzwerk "1.2.3.X" (IP-Adressraum) mit der Subnetzmaske "255.255.255.0" vorgesehen ist. Dementsprechend gibt das Programmiergerät als IP-Adressen der Automatisierungskomponente AK1 die Adresse "1.2.3.4" und der anderen Automatisierungskomponente AK2 die IP-Adresse "1.2.3.5" vor. Sollte es hierbei zu Konflikten kommen, beispielsweise in den Fällen, in denen nicht mehr genügend IP-Adressen in dem benutzten Netzsegment frei sind, würde die entsprechende Zeile des Eingabe-dialogs VP entsprechend markiert werden. Analog zu dem Vorhergenannten gibt das Programmiergerät auch die IP-Portnummer und die Identifikationsnummer vor, wobei jeweils in den Fällen, in denen eine Alternative besteht, ein entsprechender Auswahldialog, eine Auswahlmöglichkeit oder ein Hinweis ausgegeben wird, und wobei in den anderen Fällen ein passender Wert vorbelegt wird.

Durch das vorgenannte Verfahren wird ein Anwender (Programmierer) systemautomatisch zur Projektierung der erforderlichen Kommunikationsparameter geführt. Die Vorgehensweise ist unabhängig von der Art des verwendeten Kommunikationsbausteins oder des verwendeten Kommunikationsprotokolls. Dabei werden die in einer Projektdatenablage (Projektierungsdaten) verfügbaren Konfigurationsdaten der projektierten Geräte und deren Eigenschaften automatisch verwendet. Nachdem der Anwender einen Kommunikationspartner zu einer zuerst betrachteten Automatisierungskomponente selektiert hat, belegt das System automatisch die aus den vorliegenden Konfigurationsdaten gewonnen Verbindungsparameter vor, beispielsweise die Interface-Informationen der Kommunikationspartner, die Subnetzanschlüsse der Kommunikationspartner und die Teilnehmeradressen der Kommunikationspartner.

Fehlerhafte Werteangaben werden durch Validierungen des Systems verhindert. Dabei werden systemautomatisch sinnvolle Default-Werte für die Kommunikationsparameter angegeben, beispielsweise ein sinnvolles Kommunikationsprotokoll je nach ausgewähltem Kommunikationspartner. An einer einzigen Stelle in der Projektiermaske, beispielsweise bei der Programmerstellung für die Automatisierungskomponente AK1, wird für beide Kommunikationspartner, also auch für die Automatisierungskomponente AK2, die Kommunikationsverbindung KV "beidseitig" projektiert, programmiert und parametrieisert.

Weiter ist erfindungsgemäß vorgesehen, dass aus den (weitgehend automatisch) projektierten Parametern der Kommunikationsverbindung KV ein Diagnosefenster generiert und parametrisiert wird, welches im laufenden Betrieb der Automatisierungsanordnung den Online-Status der Kommunikationsverbindung KV und weitere Diagnose-Informationen (z.B. Ursachen eines Verbindungsabbruchs) anzeigt. Damit kann ein Anwender, ohne den Programmiereditor PW zu verlassen, die programmierte Kommunikationsverbindung KV überprüfen und überwachen.

## Patentansprüche

1. Programmiergerät zur Parametrisierung einer Kommunikationsverbindung (KV) zwischen Automatisierungskomponenten (AK1, AK2) in einer industriellen Automatisierungsanordnung,
wobei einer ersten und einer zweiten der Automatisierungskomponenten (AK1, AK2) jeweils ein Datensatz für die Speicherung von Verbindungsparametern der Kommunikationsverbindung (KV) zugeordnet ist,
**dadurch gekennzeichnet,**
**dass** das Programmiergerät zur automatischen Bereitstellung von Verbindungsparametern für den Datensatz zumindest der ersten Automatisierungskomponente (AK1) eingerichtet ist, wobei
das Programmiergerät zum Abruf und zur Auswertung von Projektierungsdaten zumindest der ersten Automatisierungskomponente (AK1) aus Projektierungsdaten der Automatisierungsanordnung ausgebildet ist, wobei
das Programmiergerät zum Einfügen von durch die Auswertung gewonnenen Verbindungsparameter zumindest in den Datensatz der ersten Automatisierungskomponente (AK1) eingerichtet ist, und
**dass** das Programmiergerät zur Anzeige eines Eingabe-Dialogs für die in den Datensätzen der ersten und der zweiten Automatisierungskomponente vorgesehenen Verbindungsparameter eingerichtet ist, wobei
einem Benutzer mittels des Eingabe-Dialogs die Eingabe von nicht den Projektierungsdaten entnehmbaren Verbindungsparametern und die Änderung der aus den Projektierungsdaten gewonnen Verbindungsparametern zugänglich ist.

2. Programmiergerät nach Patentanspruch 1,
**dadurch gekennzeichnet, dass**
das Programmiergerät zur automatischen Generierung von weiteren Verbindungsparametern für den Datensatz der zweiten Automatisierungskomponente (AK2) aus den Projektierungsdaten der Automatisierungsanordnung eingerichtet und zur Verwendung dieser Verbindungsparameter für den Datensatz der zweiten Automatisierungskomponente (AK2) ausgestaltet ist.

3. Programmiergerät nach einem der vorhergehenden Patentansprüche,
**dadurch gekennzeichnet, dass**
das Programmiergerät zur Funktionsanalyse der in den Datensätzen gespeicherten Verbindungsparameter eingerichtet ist und zur Anzeige eines Diagnosefensters über den Zustand der projektierten Kommunikationsverbindung (KV) ausgebildet ist.

4. Programmiergerät nach einem der vorhergehenden Patentansprüche,
**dadurch gekennzeichnet, dass**
für den Betrieb der Kommunikationsverbindung (KV) der Einsatz einer zwischengeschalteten dritten Automatisierungskomponente vorgesehen ist, wobei
das Programmiergerät zur Generierung von dritten Verbindungsparametern und zur Speicherung dieser in einen Datensatz für Verbindungsparameter der dritten Automatisierungskomponente eingerichtet ist, wobei
das Programmiergerät zur Generierung dieser dritten Verbindungsparameter aus den Projektierungsdaten der Automatisierungsanordnung eingerichtet ist.

5. Programmiergerät nach Patentanspruch 4,
**dadurch gekennzeichnet, dass**
die dritte Automatisierungskomponente ein Router, ein Switch oder eine Einrichtung mit einer Firewall ist, wobei das Programmiergerät zur Anpassung der dritten Verbindungsparameter an die Verbindungsparameter der ersten und der zweiten Automatisierungskomponente (AK1, AK2) eingerichtet ist.

6. Programmiergerät nach einem der vorherigen Patentansprüche,
**dadurch gekennzeichnet, dass**
die erste und die zweite Automatisierungseinkomponente (AK1, AK2) verschiedenen Controllern der Automatisierungsanordnung mit verschiedenen Projektierungsdateien mit Projektierungsdaten zugeordnet sind, wobei
das Programmiergerät zum simultanen oder wechselweisen Zugriff auf die Projektierungsdatei mit den Projektierungsdaten der ersten und der zweiten Automatisierungskomponente (AK1, AK2) eingerichtet ist.

7. Programmiergerät nach einem der vorhergehenden Patentansprüche,
**dadurch gekennzeichnet,**
**dass** die Funktionalität zur Konfigurierung der Kommunikationsverbindung (KV) als Software-Plug-In eines Engineering-tools für die Automatisierungsanordnung ausgebildet ist.

8. Verfahren für ein Programmiergerät zur Konfigurierung einer Kommunikationsverbindung (KV) zwischen Automatisierungskomponenten (AK1, AK2) in einer industriellen Automatisierungsanordnung,
**dadurch gekennzeichnet,**
**dass** das Programmiergerät
- in einem ersten Schritt aus den Projektierungsdaten der Automatisierungsanordnung die Projektierungsdaten einer ersten Automatisierungskomponente (AK1) ausliest,
- in einem zweiten Schritt aus den ersten Projektierungsdaten die für die erste Automatisierungskomponente (AK1) möglichen Verbindungsparameter für die Kommunikationsverbindung ermittelt,
- in einem dritten Schritt aus den Projektierungsdaten der Automatisierungsanordnung die Projektierungsdaten einer zweiten Automatisierungskomponente ausliest,
- in einem vierten Schritt aus diesen Projektierungsdaten der zweiten Automatisierungskomponente (AK2) die für die zweite Automatisierungskomponente (AK2) möglichen zweiten Verbindungsparameter ermittelt,
- in einem fünften Schritt aus den jeweils möglichen Verbindungsparametern der ersten und der zweiten Automatisierungskomponente (AK1, AK2) jeweils die Verbindungsparameter für einen ersten und einen zweiten Datensatz für die erste und die zweite Automatisierungskomponente (AK1, AK2) auswählt, wobei die ausgewählten Verbindungsparameter der ersten Automatisierungskomponente (AK1) und die der zweiten Automatisierungskomponente (AK2) zum Zwecke einer funktionsfähigen Kommunikationsverbindung (KV) aufeinander abgestimmt sind, und
- in einem sechsten Schritt die ausgewählten Verbindungsparameter in einem Eingabe-Dialog angezeigt und den Automatisierungskomponenten (AK1, AK2) zugeordnet werden.
